(19) Europäisches Patentamt
European Patent Office
Office européen des brevets

(11) **EP 1 479 030 B1**

(12) **EUROPÄISCHE PATENTSCHRIFT**

(45) Veröffentlichungstag und Bekanntmachung des Hinweises auf die Patenterteilung:
**08.12.2010 Patentblatt 2010/49**

(21) Anmeldenummer: **03714730.3**

(22) Anmeldetag: **05.02.2003**

(51) Int Cl.:
***G06K 7/00*** *(2006.01)*

(86) Internationale Anmeldenummer:
**PCT/EP2003/001144**

(87) Internationale Veröffentlichungsnummer:
**WO 2003/069538 (21.08.2003 Gazette 2003/34)**

(54) **MIT EINEM TRANSPONDER BETÄTIGBARE SCHALTVORRICHTUNG**

SWITCHING DEVICE ACTUATED WITH A TRANSPONDER

DISPOSITIF DE COMMUTATION ACTIONNE PAR UN TRANSPONDEUR

(84) Benannte Vertragsstaaten:
**AT BE BG CH CY CZ DE DK EE ES FI FR GB GR HU IE IT LI LU MC NL PT SE SI SK TR**

(30) Priorität: **18.02.2002 DE 10206676**

(43) Veröffentlichungstag der Anmeldung:
**24.11.2004 Patentblatt 2004/48**

(73) Patentinhaber: **Giesecke & Devrient GmbH**
**81677 München (DE)**

(72) Erfinder:
• **FINKENZELLER, Klaus**
**80939 München (DE)**
• **SCHILLER, Christoph**
**81667 München (DE)**

(74) Vertreter: **Metzler, Volker et al**
**Klunker Schmitt-Nilson Hirsch**
**Patentanwälte**
**Destouchesstrasse 68**
**80796 München (DE)**

(56) Entgegenhaltungen:
**EP-A- 1 024 451    DE-C- 19 855 207**
**US-A- 6 150 948**

• **PATENT ABSTRACTS OF JAPAN vol. 1999, no. 08, 30. Juni 1999 (1999-06-30) & JP 11 066444 A (TEC CORP), 9. März 1999 (1999-03-09)**

EP 1 479 030 B1

**Beschreibung**

Die Erfindung geht aus von einer Vorrichtung nach der Gattung des Hauptanspruchs. Eine Vorrichtung dieser Art ist aus der DE 198 55 207 C1 bekannt. Darin ist eine Transponderleseeinrichtung beschrieben, die durch ein Schaltsignal einschaltbar ist, welches erzeugt wird, indem durch Heranführen eines ferromagnetischen Elementes an eine Erkennungsspule darin eine Spannung induziert wird. Die Erkennungsspule ist eigens für die Auslösung des Schaltvorganges vorgesehen und um einen Permanentmagneten herum ausgebildet. Das ferromagnetische Element ist zusammen mit dem Transponder auf einem Codeträger untergebracht, der beispielsweise ein Schlüssel sein kann. Die Vorrichtung erlaubt das Einschalten der Transponderleseeinrichtung durch bloßes Annähern des Codeträgers, ohne daß dieser einer eigenen Energieversorgung bedarf. Die Vorrichtung erfordert allerdings den ständigen Betrieb einer Verstärkerschaltung, die zur Verstärkung der in die Erkennungsspule induzierten Spannung eingesetzt wird. Dabei entstehen Leerlaufverluste, die von der Energieversorgung ständig ausgeglichen werden müssen. Der Betrieb der Vorrichtung setzt deshalb eine ausreichend große Energieversorgung voraus. Muß diese sehr klein dimensioniert werden, ist die Vorrichtung nicht oder nur bedingt einsetzbar.

Eine verbreitete Transponderanwendung bilden kontaktlose tragbare Datenträger, die mit einem Lesegerät zusammenwirken, das über eine Spule verfügt, mittels derer es einen in den Ansprechbereich gebrachten Transponder zum einen mit Energie versorgt, zum anderen ausliest. Um das Heranführen eines Transponders zu erkennen, erzeugt das Lesegerät zyklisch in kurzen zeitlichen Abständen ein Magnetfeld, das geeignet ist, einen gegebenenfalls in den Ansprechbereich gebrachten Transponder mit Energie zu versorgen. Zugleich sendet das Lesegerät in der Regel jeweils ein Abfragesignal, mit dem ein Transponder angesprochen wird. Die regelmäßige Erzeugung von Magnetfeld und Abfragesignal bedingt einen vergleichsweise hohen Energieverbrauch, der das Konzept ungeeignet macht für Anwendungen, in denen eine ausreichend große Energieversorgung nicht zur Verfügung gestellt werden kann.

Aus der DE 100 06 747 A1 ist weiterhin eine gattungsgemäße Vorrichtung entnehmbar, welche speziell auf das Problem des Energieverbrauchs ausgerichtet ist. Vorgeschlagen wird, ein tragbares Transponderelement mit einem Permanentmagneten zu versehen, welcher bei Annäherung an eine Leseeinrichtung einen darin angeordneten, durch einen Magneten gesteuerten Schalter betätigt. Die vorgeschlagene Vorrichtung minimiert den Energieverbrauch der Leseeinrichtung, da diese in Abwesenheit eines Transponders vollständig ausgeschaltet bleiben kann. Der Einbau eines Permanentmagneten bedingt allerdings konstruktive Maßnahmen an den damit auszustattenden Transponderelementen, die nicht immer ohne weiteres vorgenommen werden können. Schon wegen des Problems der mechanischen Integration eignet sich die Lösung beispielsweise nicht für kontaktlose Chipkarten. Häufig ist das von einem Permanentmagneten erzeugte Magnetfeld im Hinblick auf die praktische Nutzbarkeit der damit versehenen Transponder zudem unerwünscht. Dies gilt beispielsweise für tragbare Datenträger im Chipkartenformat, bei denen Information auf einem Magnetstreifen hinterlegt ist. Auch ist die Handhabung derartiger Transponder insofern beeinträchtigt, als sie von anderen, für Magnetfelder empfindlichen Schaltungen ferngehalten werden müssen.

Aus der EP 1024 451 A1 ist weiterhin eine Leseeinrichtung für kontaktlose Chipkarten bekannt, die eine Signalisierungsvorrichtung zur Anzeige der Anwesenheit von zu vielen Chipkarten im Bereich der Leseeinrichtung aufweist. Die Signalisierungsvorrichtung besitzt dazu einen durch die anwesenden Chipkarten beeinflußten Resonanzschwingkreis, dessen Resonanzfrequenz mittels einer schaltbaren Kapazitätsdiode in periodischen Abständen geändert wird. Die dadurch im Resonanzkreis verursachte Änderung der Spannung wird ausgewertet.

Das "RFID-Handbuch" von K. Finkenzeller, Carl Hanser Verlag, 2. Auflage, 2000, beschreibt ausführlich die Grundlagen der Transpondertechnologie und gibt Beispiele für Transponderanwendungen. Besonders im Kapitel 4 dieses Buches finden sich Grundlageninformationen und ergänzende Erläuterungen zu der nachfolgend beschriebenen Erfindung. Auf diese Passagen im besonderen wie auf das Buch als ganzes wird ausdrücklich verwiesen, sie sollen Teil dieser Anmeldung sein.

Aus der DE 196 02 316 C1 ist eine Vorrichtung zum Übertragen von Daten und Versorgungsenergie von/zu einem Transponder bekannt, die beispielsweise in einem Diebstahlschutzsystem eines Kraftfahrzeuges Verwendung finden kann. Die Vorrichtung weist einen stationären Transceiver sowie einen tragbaren Transponder auf, der beim Annähern an den Transceiver mit diesem zusammenwirkt. Um eine möglichst effektive Energie- bzw. Datenübertragung zu erreichen wird vorgeschlagen, nach der Herstellung des Transceivers die Resonanzfrequenz des Sendeantennenkreises und/ oder die Größe des in dem Sendeantennenkreises fließenden Erregerstroms so einzustellen, daß sich eine maximale Energieübertragung zum Transponder ergibt. Die gefundene Einstellung wird schaltungstechnisch fixiert.

Aus der DE 199 23 367 A1 ist eine Vorrichtung zur berührungslosen Positionserfassung eines Gegenstandes bekannt, die eine Sende-, eine Empfangsantenne, sowie eine Auswerteschaltung besitzt. Die Sende- und die Empfangsantenne beeinflussen sich dabei gegenseitig. Bei Anwesenheit eines Gegenstandes ändert sich ihre Kopplung. Die Änderung wird erfaßt und ausgewertet.

Es ist Aufgabe der Erfindung, eine mit einem Transponder betätigbare Schaltungsvorrichtung anzugeben, die auf Seiten des geschalteten Schaltkreises einen möglichst geringen Energieverbrauch ermöglicht und dabei ohne Beschränkung einsetzbar ist.

Diese Aufgabe wird gelöst durch eine Vorrichtung mit Merkmalen des Hauptanspruchs. Erfindungsgemäß wird die Erzeugung eines Schaltsignalles, und damit ein Schaltvorgang, ausgelöst, indem die Verstimmung der Resonanzfrequenz eines Schwingkreises festgestellt wird. Der Schwingkreis und die für die Erkennung benötigte Schaltung können nahezu leistungslos betrieben werden. Entsprechend weist die erfindungsgemäße Schaltvorrichtung einen außerordentlich geringen Energieverbrauch auf. Sie eignet sich deshalb in besonderer Weise zur Betätigung von Schaltkreisen, deren Energieversorgung aus einer begrenzten Energiequelle erfolgt. Insbesondere eignet sie sich zur Versorgung von aus kleinen Batterien gespeisten Schaltkreisen. Die weitgehende Unabhängigkeit von der Größe der zur Verfügung stehenden Energiequelle erlaubt eine freizügige Verwendung der Vorrichtung in einer Vielzahl von sonst nicht in Betracht kommenden Einbauorten. Unter anderem eignet sie sich zum Einbau in Türschließeinrichtungen, um ein transpondergestütztes, berührungsloses Türöffnen zu ermöglichen.

Die erfindungsgemäße Vorrichtung ist weiterhin sehr benutzerfreundlich, weil sie von einem Benutzer keinerlei besondere Handhabungsmaßnahmen erfordert. Die eingesetzten Transponder haben eine übliche Erscheinungsform und werden auf übliche Weise genutzt. Die übliche Ausführung der eingesetzten Transponder wirkt sich auch vorteilhaft auf ihre Herstellung aus, da keine besonderen konstruktiven Maßnahmen im Aufbau erforderlich sind. Ein weiterer Vorteil der erfindungsgemäßen Vorrichtung besteht insbesondere darin, daß transponderseitig die ohnehin vorhandene Spule des Transponders den Schaltvorgang auslöst, besondere Bauelemente mithin nicht erforderlich sind. Die Transponder können entsprechend kostengünstig ausgeführt werden.

Unter Bezugnahme auf die Zeichnung wird nachfolgend ein Ausführungsbeispiel der Erfindung näher erläutert.

Zeichnung:

Es zeigen:

Fig.1    ein Blockschaltbild einer Schaltvorrichtung,

Fig. 2    ein Ersatzschaltbild eines Teils der Schaltvorrichtung,

Fig. 3    ein Ersatzschaltbild eines Frequenzbeobachters,

Fig. 4    eine Nutzung der Schaltvorrichtung in einer Türschließeinrichtung.

Beschreibung:

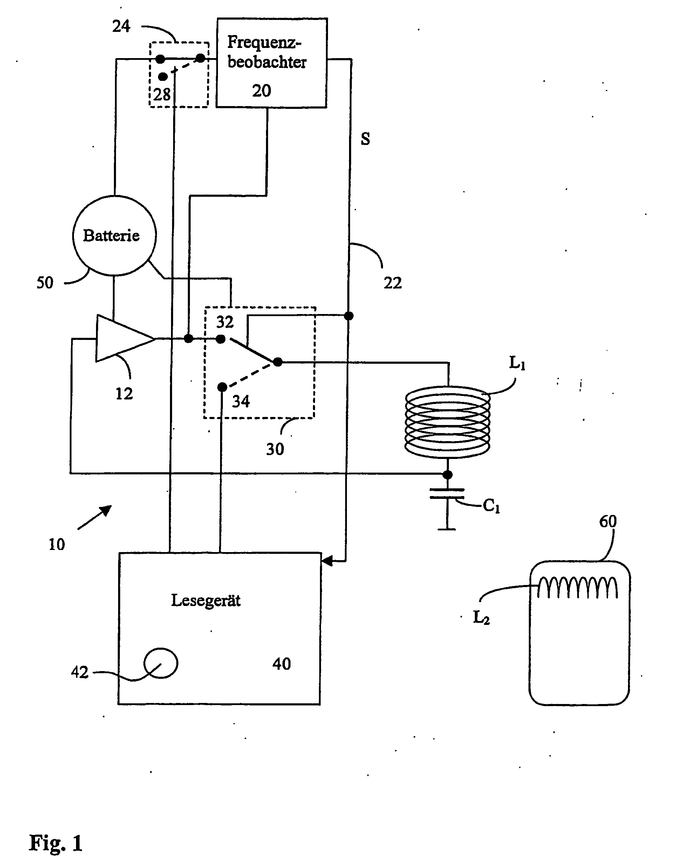

Grundelemente der in Fig. 1 gezeigten Schaltvorrichtung sind ein Schwingkreis 10, ein an den Schwingkreis 10 angeschlossener Frequenzbeobachter 20, ein in dem Schwingkreis 10 angeordneter, von dem Frequenzbeobachter 20 betätigter Schalter 30, ein mit dem Schalter 30 und dem Frequenzbeobachter 20 verbundener Funktiosschaltkreis 40 sowie ein Transponder 60 zum Auslösen eines Schaltvorganges. Ein weiteres Grundelement ist daneben eine Energiequelle 50, welche den Schwingkreis 10, den Frequenzbeobachter 20 sowie den Schalter 30 mit Energie versorgt.

Der Schwingkreis 10 baut sich aus einer Erkennungsspule $L_1$, einer Kapazität $C_1$ sowie einem Oszillatorverstärker 12 auf. Weiterer Bestandteil des Schwingkreises 10 ist zudem der Schalter 30. Die Farkermungsspule $L_1$ und die Kapazität $C_1$ bestimmen die Resonanzfrequenz $f_1$ des Schwingkreises 10. Der Oszillatorverstärker 12 ist zweckmäßig als rückgekoppelter Transistorverstärker ausgeführt. Er erhält den Schwingkreis 10 in Resonanz auf der Resonanzfrequenz $f_1$ und gleicht die über die Erkennungsspule $L_1$ und die Kapazität $C_1$ sowie gegebenenfalls vorhandene weitere Bauelemente entstehenden Energieverluste aus. Er ist hierzu mit der Energiequelle 50 verbunden.

Der Frequenzbeobachter 20 beinhaltet eine Schaltung, die es erlaubt Änderungen der auf dem Schwingkreis 10 stehenden Resonanzfrequenz $f_1$ zu erkennen. Die Schaltung ist hierzu vorzugsweise als Amplitudenmeßeinrichtung, als Phasenmeßeinrichtung oder als Frequenzmeßeinrichtung ausgebildet. Erkennt der Frequenzbeobachter 20 eine Verstimmung der Resonanzfrequenz $f_1$ im Schwingkreis 10, erzeugt er ein Schaltsignal S, welches über eine Steuerleitung 22 zum einen den Schalter 30 anspricht, zum anderen den Funktionsschaltkreis 40.

Die Energieversorgung des Frequenzbeobachters 20 erfolgt aus der Energiequelle 50, mit der er hierzu verbunden ist. Zweckmäßig erfolgt die Verbindung über einen Schalter 24, der durch den Funktionsschaltkreis 40 betätigt wird. Mittels des Schalters 24 trennt der Funktionsschaltkreis 40 den Frequenzbeobachter 20 für die Dauer der Kommunikation mit einem Transponder 60 von der Energieversorgung 50, nachdem er zuvor selbst durch ein Schaltsignal S eingeschaltet wurde. Nach Abschluß einer Kommunikation mit einem Transponder 60 schaltet der Funktionsschaltkreis 40 den Frequenzbeobachter 20 wieder ein, indem er ihn durch Umlegen des Schalters 24 wieder mit der Energiequelle 50 verbindet.

Der Schalter 30 kann von beliebiger Bauart sein. In seiner Grundstellung 32 schließt er, wie in Fig.1 angedeutet, den Schwingkreis 10. Nach Erhalt eines Schaltsignales S über die Steuerleitung 22 wechselt er in die Position 34 und verbindet die Erkennungsspule $L_1$ mit dem Funktionsschaltkreis 40.

Der Funktionsschaltkreis 40 kann grundsätzlich durch jede beliebige Schaltung gebildet sein, welche durch ein Schaltsignal S ansprechbar ist. Im Ausführungsbeispiel wird davon ausgegangen, daß der Funktionsschaltkreis 40 ein kontaklos arbeitendes Transponderlesegerät ist, welches im Anschluß an eine Kommunikation mit einem Transponder 60 eine Funktion auslöst oder nicht auslöst. Im Hinblick auf die mittels der beschriebenen Vorrichtung erzielbaren Vorteile wird ferner davon ausgegangen, daß der, im folgenden Lesegerät genannte, Funktionsschaltkreis 40 eine eigene Energiequelle 42 in Gestalt einer Batterie besitzt. Zur Durchführung einer Kommunikation mit einem Transponder 60 ist das Lesegerät 40 durch Bewegen des Schalters 30 in die Position 34 mit der Erkennungsspule $L_1$ verbindbar. Durch ein über die Steuerleitung 22 zugeführtes Steuersignal S wird es eingeschaltet. Weiterhin kann das Lesegerät 40 mit einem zwischen Energiequelle 50 und Frequenzbeobachter 20 angeordneten Schalter 24 verbunden sein, über den der Frequenzbeobachter 20 ein- und ausschaltbar ist, indem er mit der Energiequelle 50 verbunden bzw. nicht verbunden ist.

Die Energiequelle 50 hat zweckmäßig die Gestalt einer Batterie. Sie liefert die Energieversorgung für den Oszillatorverstärker 12, den Frequenzbeobachter 20 und den Schalter 30. Die Energiequelle 50 kann eine bauliche Einheit mit der Energiequelle 42 bilden und insbesondere auch von einer einzelnen Energiequelle, also etwa durch eine einzelne Batterie gebildet sein.

Der Transponder 60 ist von üblicher Bauart und fungiert beispielsweise als Träger für einen Code, der durch das Lesegerät 40 geprüft wird. Beispielsweise besitzt er die Gestalt eines tragbaren Datenträgers im Format einer Norm-Chipkarte. Daneben kann er auch in beliebigen anderen Bauformen vorliegen, etwa in Gestalt einer Armbanduhr oder eines Schreibgerätes. Wesentlicher Bestandteil des Transponders 60 im Hinblick auf die hier beschriebene Vorrichtung ist eine Transponderspule $L_2$. Durch sie läßt sich ein Schaltvorgang auslösen.

Funktionsgrundlage der in Fig.1 dargestellten Vorrichtung bildet eine magnetische Gegenkopplung M, die sich zwischen der Erkennungsspule $L_1$ und der Transponderspule $L_2$ einstellt, wenn beide in ausreichende Nähe zueinander gebracht werden. Die Gegenkopplung M stellt sich dabei ein, ohne daß es einer aktiven Mitwirkung des Transponders 60 bedarf, der Transponder 60 muß keine Energie bereitstellen. Durch die Gegenkopplung M wird eine Impedanz $Z_T$ in die Erkennungsspule $L_1$ transformiert. Die Einkopplung der Impedanz $Z_T$ hat zur Folge, daß sich die Resonanzbedingungen im Schwingreis 10 ändern Dadurch ändert sich die Resonanzfrequenz $f_1$ des Schwingkreises 10: Die eingekoppelte Impedanz $Z_T$ ist dabei nicht abhängig von der Größe des in dem Schwingkreis 10 fließenden Stromes h. Dieser kann daher durch geeignete Dimensionierung der Schwingkreisbauelemente auf einen Wert von nahezu 0 eingestellt werden kann.

Für die eingekoppelte Impedanz $Z_T$ gilt:

$$Z_T = \omega^2\, k^2\, L_1\, L_2\, (R_2 + j\omega L_2 + R_L/(1 + j\omega\, R_L C_2))^{-1} \qquad (1)$$

wobei für die magnetische Kopplung M zwischen der Erkennungsspule $L_1$ und der Transponderspule $L_2$ gilt:

$$M = k\,(L_1\, L_2)^{1/2}.$$

Eine Ableitung der Beziehung (1) für die transformiert Impedanz $Z_T$ findet sich in dem in der Einleitung angegebenen "RFID-Handbuch", K. Finkenzeller, 2. Auflage, 2000, insbesondere Kapitel 4.1.10. Unter besonderem Hinweis auf dieses Buch wird von einer detaillierten Ableitung an dieser Stelle abgesehen.

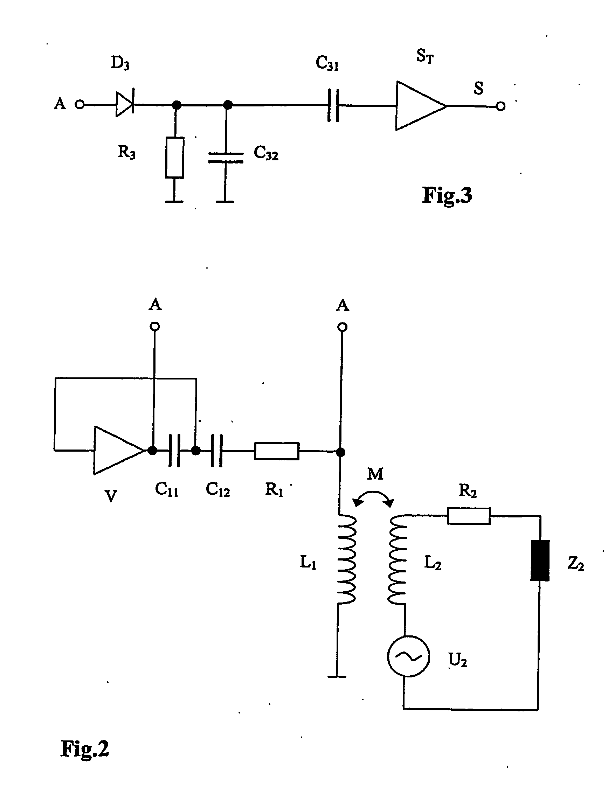

Zur Erläuterung der Bedeutung der Beziehung (1) zeigt Fig. 2 ein Ersatzschaltbild des Schwingkreises 10 und des Transponders 60. Der Schwingkreis 10 umfaßt die Erkennungsspule $L_1$, einen der Erkennungsspule $L_1$ zugeordneten ohmschen Widerstand $R_1$, einen rückgekoppelten Verstärker V als Oszillatorverstärker 12 sowie eine Gesamtkapazität $C_1$, die sich zusammensetzt aus einer ersten Teilkapazität $C_{11}$ zur Herbeiführung einer Spannungsteilung für die Rückkopplung sowie einer zweiten Teilkapazität $C_{12}$ zur Einstellung der Resonanzfrequenz. Die Bauelemente des Schwingkreises 10 sind vorzugsweise so dimensioniert, daß die Erkennungsspule $L_1$ und die Kapazität $C_1$ die Resonanzfrequenz $f_1$ des Schwingkreises 10 im wesentlichen alleine bestimmen.

Um einen möglichst großen Effekt zu erreichen, werden $L_1$ und $C_1$ vorzugsweise so gewählt, daß der unbelastete Schwingkreis 10 genau auf der Resonanzfrequenz eines korrespondierenden Transponders 60 arbeitet. In diesem Fall wird für $Z_T$ ein maximaler Wert erreicht, wodurch die Erkennung einer Verstimmung durch den Frequenzbeobachter 20 verbessert wird.

Angelehnt an gängige Transponderlösungen liegen typische im Schwingkreis 10 eingestellte und gleichermaßen vom Transponder 60 genutzte Resonanzfrequenzen $f_1$ unterhalb von 135 kHz. Grundsätzlich kommen aber auch beliebige andere Frequenzbereiche in Betracht, z. B. die für die ISO-Normen relevante Frequenz von 13,56 MHz.

Der Transponder 60 besteht aus der Transponderspule $L_2$, einer Spannungsquelle $U_2$ einer Transponderim-

pedanz $Z_2$ sowie einem ohmschen Widerstand $R_2$ der Transponderspule $L_2$. Die Transponderimpedanz $Z_2$ setzt sich dabei aus einem Lastwiderstand $R_L$ sowie einer Kapazität $C_2$ zusammen. Die Spannungsquelle $U_2$ bildet die Spannung, die aufgrund der magnetischen Kopplung M durch den in der Erkennungsspule $L_1$ fließenden Strom h in die Transponderspule $L_2$ induziert wird.

Fig. 3 zeigt ein Ersatzschaltbild eines möglichen Frequenzbeobachters 20. Er ist an einem der Anschlußpunkte A an dem Schwingkreis 10 angeschaltet. Grundlage des gezeigten Frequenzbeobachters 20 bildet ein Differenzierglied, das eine Diode $D_3$, eine seriell nachgeschaltete Differenzierkapazität $C_{31}$ sowie eine Parallelschaltung aus einem Widerstand $R_3$ und einer Kapazität $C_{32}$ umfaßt, über welche der Ausgang der Diode $D_3$ mit Masse verbunden ist. Der Ausgang der Differenzierkapazität $C_{31}$ bildet den Eingang einer Schmitt-Triggerschaltung $S_T$, an deren Ausgang ein gegebenenfalls erzeugtes Schaltsignal S anliegt.

Der Frequenzbeobachter 20 mit der in Fig. 3 wiedergegebenen Schaltung arbeitet wie folgt. Ist im unbelasteten Schwingkreis 10 in Abwesenheit eines Transponders 60 eine konstante Schwingung mit der Resonanzfrequenz $f_1$ eingestellt, liegt am Ausgang der Diode $D_3$ eine konstante Gleichspannung an, die zu der Amplitude der Schwingung im Schwingkreis 10 proportional ist. Über dem Widerstand $R_B$ erzeugt sie einen - minimalen - Stromfluß $I_3$, dessen Größe durch entsprechende Dimensionierung des Widerstandes $R_3$ auf einen Wert von nahezu 0 einstellbar ist.

Wird nun ein Transponder 60 mit einer Transponderspule $L_2$ in das Feld der Erkennungsspule $L_1$ gebracht, bewirkt diese Annäherung die Einkopplung einer Impedanz $Z_T$ gemäß der Beziehung (1) in den Schwingkreis 10. Hierdurch ändern sich in dem Schwingkreis 10 die Resonanzfrequenz $f_1$ und die Amplitude der Schwingung. Am Ausgang der Diode $D_3$ entsteht dadurch vorübergehend eine sich entsprechend der Änderung der Amplitude verändernde Wechselspannung, welche an der Differenzierkapazität $C_B$ als Spannungspuls erscheint und einen kurzfristigen, impulsartigen Stromfluß zu der Schmitt-Triggerschaltung $S_T$ bewirkt. Diese wird durch den Spannungspuls veranlaßt, ein Schaltsignal S abzugeben. Das Schaltsignal S bewirkt nun zum einen das Umschalten des Schalters 30 in die Position 34. Dadurch wird die Erkennungsspule $L_1$ mit dem Lesegerät 40 verbunden und dient diesem nachfolgend als Energieübertrager und Kommunikationseinrichtung zur Energieversorgung und Kommunikation mit dem Transponder 60. Zum anderen schaltet das Schaltsignal S das Lesegerät 40 ein.

Ist ein Schalter 24 vorhanden, schaltet das Lesegerät 40, nachdem es selbst eingeschaltet wurde, seinerseits den Frequenzbeobachter 20 aus, indem es den Schalter 24 in die Position 28 steuert. Anschließend kommuniziert das Lesegerät 40 über die Spule $L_1$ mit dem Transponder 60. Nach Beendigung der Kommunikation mit einem Transponder 60 schaltet das Lesegerät 40 den Frequenzbeobachter 20 wieder ein.

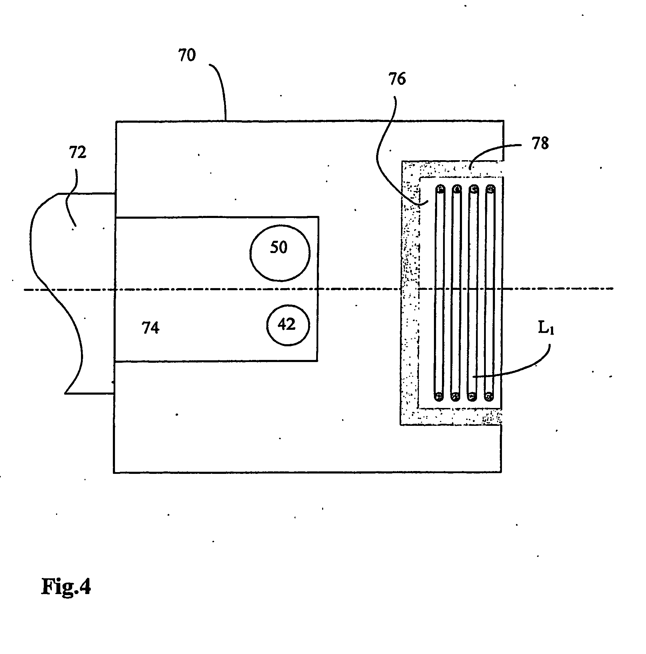

Fig. 4 zeigt eine Anwendung der beschriebenen Schaltvorrichtung in einem Schließsystem für Türen. Dargestellt ist ein drehbarer Türknauf 70, welcher auf einer Welle 72 sitzt, die in eine - nicht gezeigte - Tür geführt ist und dort durch Drehung die Entriegelung bzw. die Verriegelung der Tür durch Bewegen einer mechanischen Sperre ermöglicht. Der Türknauf 70 besitzt innenliegend einen ersten Hohlraum 74 zur Aufnahme einer ersten Batterie 50 zur Energieversorgung der Schaltvorrichtung sowie einer zweiten Batterie 42 zur Energieversorgung eines - nicht gezeigten - Lesegerätes 40. Anstelle zweier Batterien 50, 42 kann auch eine einzelne Batterie vorgesehen sein, die sowohl die Schaltvorrichtung wie das Lesegerät 40 versorgt. An der außenliegenden, nutzerzugewandten Endfläche besitzt der Türknauf 70 desweiteren einen zweiten Hohlraum 76, in dem eine Erkennungsspule $L_1$ angeordnet ist. Die Erkennungsspule $L_1$ ist gemäß der in Fig.1 dargestellten Variante über einen - ebenfalls nicht gezeigten - Schalter 30 mit dem Lesegerät 40 verbunden und dient nach Erkennen eines Transponders 60 zur Kommunikation damit sowie zu dessen Energieversorgung.

Der Türknauf 70 besteht aus einem metallischem Material. Um sicherzustellen, daß der Betrieb der Erkennungsspule 76 nicht durch Verluste durch Wirbelstrominduktion in das Türknaufmaterial beeinträchtigt wird, ist die Innenoberfläche des Hohlraumes 76 mit einer Abschirmung 78 belegt. Als Material für die Abschirmung 78 eignen sich z. B. Ferritmaterialien oder hochpermeable Metalle, etwa amorphe Metalle. Weiter kann vorgesehen sein, daß die Erkennungsspule 76 auf einen Ferritkern gewickelt ist. Diese Ausführungsvariante empfiehlt sich besonders, wenn die Resonanzfrequenz $f_1$ im unbelasteten Schwingkreis 10 kleiner ist als 135 kHz. In einem weiteren, nicht gezeigten Hohlraum in dem Türknauf 70 ist das Lesegerät 40 angeordnet. Vorzugsweise nutzt das Lesegerät 40 zur Kommunikation mit einem Transponder 60, wie Fig. 1 dargestellt, die Erkennungsspule $L_1$, die zu diesem Zweck nach erkannter Annäherung eines Transponders 60 über einen Schalter 30 auf das Lesegerät 40 geschaltet wird.

Unter Beibehaltung des grundlegenden Ansatzes, eine Schaltvorrichtung zu realisieren, welche durch Erkennen der Verstimmung einer Resonanzfrequenz $f_1$ in einem nahezu leistungslos betriebenen Schwingkreis 10 betätigt wird, erlaubt die vorgeschriebene Schaltvorrichtung eine Vielzahl von Ausgestaltungen. Dies gilt etwa für die bauliche Realisierung des Schwingkreises 10 und des Frequenzbeobachters 20. Letzterer kann insbesondere durch jede andere Schaltung ersetzt werden, die es gestattet, unter Aufnahme einer geringstmöglichen Energiemenge die Resonanzbedingungen in einem Schwingkreises sowie deren Änderungen zu beobachten. Unter anderem kann der Frequenzbeobachter 20 beispielsweise auch unter Verwendung eines Pulsgenerators, etwa eines Monoflops mit einem Ausgangspuls konstanter Zeit, realisiert sein, dem ein Integrator und ein Schwellwertschalter nachgeschaltet sind. Eine weitere mögliche Ausführung beinhaltet einen auf die Resonanzfrequenz $f_1$ abgestimmten Bandpaßfilter, dem eine Gleichrichterschaltung sowie ein Schwellwertschalter nachgeschaltet sind. Denkbar ist ferner, nur eine Gleichrichterschaltung vorzusehen, der ein Schwellwertschalter oder ein Fensterdiskriminator nachgeschaltet ist. Im Schwingkreis 10 kann weiter der Abgriff für die Verstärkerrückkoppelung an anderen geeigneten Punkten, z. B. über die Spule erfolgen. Nicht notwendig ist weiter, daß die Erkennungsspule $L_1$ nach Ansprechen des Frequenzbeobachters 20 über einen Schalter 30 mit dem Lesegerät 40 verbunden wird. Ebenso kann vorgesehen sein, daß das Lesegerät 40 mit einer eigenen Spule versehen ist und ein von dem Frequenzbeobachter 20 gegebenenfalls ausgegebenes Schaltsignal S direkt das Lesegerät 40 einschaltet. Ein Schalter 30 entfällt in dieser Ausführung. Eine Vielzahl von Realsierungsmöglichkeiten bietet sich ferner für den Schalter 24. Er kann zum Beispiel innerhalb des Frequenzbeobachters 20 realisiert sein und seine Ansteuerung über die Signalleitung 22 erfolgen. Desweiteren ist die Verwendung der vorgeschlagenen Schaltvorrichtung nicht auf die beispielhaft beschriebene Anwendung in Türschließsystemen beschränkt. Sie eignet sich vielmehr für beliebige andere Schaltsituationen.

## Patentansprüche

1. Transpondererkennungseinrichtung mit einer durch einen Transponder betätigbaren Schaltvorrichtung zur Erzeugung eines Schaltsignales, wobei die Schalteinrichtung

   - einen Schwingkreis (10) mit einer Kapazität ($C_1$) und einer Erkennungsspule ($L_1$), wobei die Erkennungsspule ($L_1$) und die Kapazität ($C_1$) die Resonanzfrequenz ($f_1$) des Schwingkreises (10) bestimmen,
   - einen Frequenzbeobachter (20), welcher die in dem Schwingkreis (10) eingestellte Resonanzfrequenz ($f_1$) auswertet und bei Feststellen einer Verstimmung ein Schaltsignal (S) erzeugt und

   eine unabhängige Energiequelle (50) zur Versorgung des Schwingkreises (10) und des Frequenzbeobachters (20) mit Energie umfaßt,
   **dadurch gekennzeichnet, daß**
   der Schwingkreis (10) weiter einen Oszillatorverstärker (12) aufweist, der als rückgelkoppelter Verstärker ausgeführt ist, um den Schwingkreis in Resonanz auf der Resonanzfrequenz zu erhalten, und die Erkennungsspule ($L_1$) über einen Schalter (30) mit einem Funktionsschaltkreis zur Durchführung einer Kommunikation mit dem Transponder (40) verbindbar ist, wobei der Schalter (30) durch das Schaltsignal (S) des Frequenzbeobachters (20) betätigbar ist.

2. Transpondererkennungseinrichtung nach Anspruch 1 **dadurch gekennzeichnet, daß** das Schaltsignal (S) über eine Steuerleitung (22) zu einem Funktionsschaltkreis (40) geführt ist.

3. Transpondererkennungseinrichtung nach Anspruch 1 **dadurch gekennzeichnet, daß** der Frequenzbeobachter (20) trennbar mit der Energieversorgung (50) verbunden ist.

4. Transpondererkennungseinrichtung nach Anspruch 3 **dadurch gekennzeichnet, daß** die Trennbarkeit durch einen Schalter (24) realsiert ist, der von dem Funktionsschaltkreis (40) betätigt wird.

5. Transpondererkennungseinrichtung nach Anspruch 1 **dadurch gekennzeichnet, daß** die Resonanzfrequenz ($f_1$) des Schwingkreises durch die Erkennungsspule ($L_1$) sowie durch eine zu diesem Zweck in den Schwingkreis (10 geschaltete Kapazität ($C_1$) definiert wird.

6. Transpondererkennungseinrichtung nach Anspruch 1 **dadurch gekennzeichnet, daß** die Resonanzfrequenz ($f_1$) des Schwingkreis (10) übereinstimmt mit der Resonanzfrequenz eines Transponders (60).

7. Transpondererkennungseinrichtung nach Anspruch 1 **dadurch gekennzeichnet, daß** der Frequenzbeobachter (20) ein Differenzierglied beinhaltet.

8. Transpondererkennungseinrichtung nach Anspruch 1 **dadurch gekennzeichnet, daß** der Frequenzbeobachter (20) dazu ausgebildet ist, eine Änderung der Phasenlage der in den Schwingkreis (10) eingestellten Resonanzschwingung zu erkennen.

9. Verwendung einer Transpondererkennungseinrichtung nach Anspruch 1 zum Einschalten eines Funktionsschaltkreises (40).

10. Verwendung nach Anspruch 9, **dadurch gekennzeichnet, daß** der Funktionsschaltkreis (40) aus einer begrenzten Energiequelle (42) mit Energie versorgt wird.

**11.** Funktionsauslösesystem mit einem Funktionsschaltkreis (40), welcher durch ein Schaltsignal (S) einschaltbar ist, **dadurch gekennzeichnet, daß** die Erzeugung des Schaltsignales (S) durch eine Transpondererkennungseinrichtung gemäß Anspruch 1 erfolgt.

**12.** Berechtigungserkennungssystem mit einem Transponderlesegerät (40), welches durch Kommunikation und einem Transponder (60) die Berechtigung eines Nutzers prüft; **dadurch gekennzeichnet, daß** das Transponderlesegerät (40) mit einer Transpondererkennungseinrichtung gemäß Anspruch 1 verbunden ist, welche das Transponderlesegerät (40) einschaltet, wenn ihr ein Transponder (60) präsentiert wurde.

**13.** Schließsystem für eine Tür, **dadurch gekennzeichnet, daß** es eine Transpondererkennungseinrichtung gemäß Anspruch 1 aufweist, welche ein Transponderlesegerät (40) einschaltet, das durch Kommunikation mit einem Transponder (60) die Berechtigung eines Nutzers zur Betätigung des Schließsystems prüft.

**14.** Schließsystem nach Anspruch 13 **dadurch gekennzeichnet, daß** die Erkennungsspule ($L_1$) in einem Türknauf (70) angeordnet ist.

**15.** Schließsystem nach Anspruch 13, **dadurch gekennzeichnet, daß** die Erkennungsspule ($L_1$) in einem Hohlraum (76) angeordnet ist, welcher an den Innenwänden zum Türknauf (70) hin mit einer Abschirmung (78) belegt ist.

**16.** Schließsystem nach Anspruch 13 **dadurch gekennzeichnet, daß** die Abschirmung (78) von einem Material gebildet ist, das Verluste durch in das Türknaufmaterial induzierte Wirbelströme verhindert.

**Claims**

**1.** A transponder identification device having a switching apparatus, actuatable by a transponder, for generating a switching signal, wherein the switching apparatus comprises

- an oscillating circuit (10) having a capacitor ($C_1$) and an identification coil ($L_1$), wherein the identification coil ($L_1$) and the capacitor ($C_1$) determine the resonant frequency ($f_1$) of the oscillating circuit (10),
- a frequency observer (20) which evaluates the resonant frequency ($f_1$) tuned in the oscillating circuit (10) and, upon detecting a detuning, generates a switching signal (S), and
- an independent power source (50) for supplying the oscillating circuit (10) and the frequency observer (20) with power,

**characterized in that**
the oscillating circuit (10) further has an oscillator amplifier (12) which is configured as a feedback amplifier to keep the oscillating circuit in tune at the resonant frequency, and the identification coil ($L_1$) is connectable via a switch (30) to a functional switching circuit (40) for carrying out a communication with the transponder, wherein the switch (30) is actuatable by the switching signal (S) of the frequency observer (20).

**2.** The transponder identification device according to claim 1, **characterized in that** the switching signal (S) is conducted via a control line (22) to a functional switching circuit (40).

**3.** The transponder identification device according to claim 1, **characterized in that** the frequency observer (20) is separably connected to the power supply (50).

**4.** The transponder identification device according to claim 3, **characterized in that** the separability is realized by a switch (24) which is actuated by the functional switching circuit (40).

**5.** The transponder identification device according to claim 1, **characterized in that** the resonant frequency ($f_1$) of the oscillating circuit is defined by the identification coil ($L_1$) and by a capacitor ($C_1$) inserted into the oscillating circuit (10) for this purpose.

**6.** The transponder identification device according to claim 1, **characterized in that** the resonant frequency ($f_1$) of the oscillating circuit (10) matches the resonant frequency of a transponder (60).

**7.** The transponder identification device according to claim 1, **characterized in that** the frequency observer (20) includes a differentiating element.

8. The transponder identification device according to claim 1, **characterized in that** the frequency observer (20) is configured to identify a change in the phase relationship of the resonance oscillation tuned in the oscillating circuit (10).

9. Use of a transponder identification device according to claim 1 for switching on a functional switching circuit (40).

10. The use according to claim 9, **characterized in that** the functional switching circuit (40) is supplied with power from a limited power source (42).

11. A function triggering system having a functional switching circuit (40) adapted to be switched on by a switching signal (S), **characterized in that** the generation of the switching signal (S) is effected by a transponder identification device according to claim 1.

12. An authorization identification system having a transponder reading device (40) which verifies the authorization of a user by communication and *[sic]* a transponder (60), **characterized in that** the transponder reading device (40) is connected to a transponder identification device according to claim 1 which switches on the transponder reading device (40) when a transponder (60) has been presented thereto.

13. A locking system for a door, **characterized in that** it has a transponder identification device according to claim 1 which switches on a transponder reading device (40) which, by communication with a transponder (60), verifies the authorization of a user to actuate the locking system.

14. The locking system according to claim 13, **characterized in that** the identification coil ($L_1$) is disposed in a door knob (70).

15. The locking system according to claim 13, **characterized in that** the identification coil ($L_1$) is disposed in a hollow space (76) which is covered with a shielding (78) on the inside walls towards the door knob (70).

16. The locking system according to claim 13, **characterized in that** the shielding (78) is formed from a material that prevents losses through eddy currents induced into the door-knob material.


**Revendications**

1. Appareillage de reconnaissance de transpondeur comportant un dispositif de commutation actionnable par un transpondeur pour la génération d'un signal de commutation, le dispositif de commutation comprenant

   - un circuit oscillant (10) comportant une capacité ($C_1$) et une bobine de reconnaissance ($L_1$), la bobine de reconnaissance ($L_1$) et la capacité ($C_1$) déterminant la fréquence de résonance ($f_1$) du circuit oscillant (10),
   - un observateur de fréquence (20) qui évalue la fréquence de résonance ($f_1$) réglée dans le circuit oscillant (10) et qui génère un signal de commutation (S) en cas de constatation d'un désaccord, et
   - une source d'énergie indépendante (50) destinée à alimenter en énergie le circuit oscillant (10) et l'observateur de fréquence (20),

   **caractérisé en ce que**
   le circuit oscillant (10) comporte en outre un amplificateur d'oscillateur (12) réalisé sous forme d'amplificateur à contre-réaction afin de maintenir le circuit oscillant en résonance sur la fréquence de résonance, et **en ce que** la bobine de reconnaissance ($L_1$) est reliable avec un circuit de fonction (40) par l'intermédiaire d'un commutateur (30) pour l'exécution d'une communication avec le transpondeur, le commutateur (30) étant actionnable par le signal de commutation (S) de l'observateur de fréquence (20).

2. Appareillage de reconnaissance de transpondeur selon la revendication 1, **caractérisé en ce que** le signal de commutation (S) est acheminé à un circuit de fonction (40) par l'intermédiaire d'un fil pilote (22).

3. Appareillage de reconnaissance de transpondeur selon la revendication 1, **caractérisé en ce que** l'observateur de fréquence (20) est relié de manière séparable avec l'alimentation en énergie (50).

**4.** Appareillage de reconnaissance de transpondeur selon la revendication 3, **caractérisé en ce que** la séparabilité est réalisée par un commutateur (24) qui est actionné par le circuit de fonction (40).

**5.** Appareillage de reconnaissance de transpondeur selon la revendication 1, **caractérisé en ce que** la fréquence de résonance ($f_1$) du circuit oscillant est définie par la bobine de reconnaissance ($L_1$) ainsi que par une capacité ($C_1$) branchée à cet effet dans le circuit oscillant (10).

**6.** Appareillage de reconnaissance de transpondeur selon la revendication 1, **caractérisé en ce que** la fréquence de résonance ($f_1$) du circuit oscillant (10) coïncide avec la fréquence de résonance d'un transpondeur (60).

**7.** Appareillage de reconnaissance de transpondeur selon la revendication 1, **caractérisé en ce que** l'observateur de fréquence (20) comporte un étage différentiateur.

**8.** Appareillage de reconnaissance de transpondeur selon la revendication 1, **caractérisé en ce que** l'observateur de fréquence (20) est conçu pour détecter une modification de la relation de phase de l'oscillation de résonance réglée dans le circuit oscillant (10).

**9.** Utilisation d'un appareillage de reconnaissance de transpondeur selon la revendication 1 pour l'enclenchement d'un circuit de fonction (40).

**10.** Utilisation selon la revendication 9, **caractérisée en ce que** le circuit de fonction (40) est alimenté en énergie à partir d'une source d'énergie limitée (42).

**11.** Système de déclenchement de fonction comportant un circuit de fonction (40) qui est enclenchable par un signal de commutation (S), **caractérisé en ce que** la génération du signal de commutation (S) a lieu par l'intermédiaire d'un appareillage de reconnaissance de transpondeur selon la revendication 1.

**12.** Système de reconnaissance d'autorisation comportant un appareil de lecture de transpondeur (40) qui, par communication avec un transpondeur (60), contrôle l'autorisation d'un usager, **caractérisé en ce que** l'appareil de lecture de transpondeur (40) est relié avec un appareillage de reconnaissance de transpondeur selon la revendication 1 qui, quand un transpondeur (60) lui est présenté, enclenche l'appareil de lecture de transpondeur (40).

**13.** Système de fermeture pour une porte, **caractérisé en ce qu'**il comporte un appareillage de reconnaissance de transpondeur selon la revendication 1, lequel appareillage enclenche un appareil de lecture de transpondeur (40) qui, par communication avec un transpondeur (60), vérifie l'autorisation d'un usager d'actionner le système de fermeture.

**14.** Système de fermeture selon la revendication 13, **caractérisé en ce que** la bobine de reconnaissance ($L_1$) est agencée dans un pommeau de porte (70).

**15.** Système de fermeture selon la revendication 13, **caractérisé en ce que** la bobine de reconnaissance ($L_1$) est agencée dans une cavité (76) dont les parois intérieures donnant sur le pommeau (70) sont garnies d'un blindage (78).

**16.** Système de fermeture selon la revendication 13, **caractérisé en ce que** le blindage (78) est constitué d'un matériau qui empêche les pertes dues à des courants de Foucault induits dans le matériau du pommeau de porte.

**Fig. 1**

Fig.3

Fig.2

70

76

72

78

50

74

42

L₁

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19855207 C1
- DE 10006747 A1
- EP 1024451 A1
- DE 19602316 C1
- DE 19923367 A1

**In der Beschreibung aufgeführte Nicht-Patentliteratur**

- **von K. Finkenzeller.** RFID-Handbuch. Carl Hanser Verlag, 2000
- **K. Finkenzeller.** RFID-Handbuch. 2000